# EUROPÄISCHE PATENTANMELDUNG

(11) **EP 2 878 248 A1**
(43) Veröffentlichungstag der Anmeldung: **03.06.2015**
(21) Anmeldenummer: 15151462.7
(22) Anmeldetag: 16.01.2015
(51) Int. Cl.: A47J 43/07

(54) **ELEKTROMOTORISCH BETRIEBENE KÜCHENMASCHINE**

(30) Priorität: 23.01.2014 DE 102014100777
(71) Anmelder: Vorwerk & Co. Interholding GmbH, 42275 Wuppertal (DE)
(72) Erfinder: Fricke, Christopher, 42119 Wuppertal (DE)
(74) Vertreter: Müller, Enno

(57) **Zusammenfassung**

Die Erfindung betrifft eine elektromotorisch betriebene Küchenmaschine (1) mit einem Rührgefäß (10) und einem Rührwerk in dem Rührgefäß (10), wobei das Rührgefäß (10) bevorzugt aufheizbar ist, und mit einem Gehäuse (2), wobei das Gehäuse (2) verschiedene Gehäusebereiche (G), beispielsweise ein Bedienfeld (6), auf dem Bedienungsmittel (7) und/ oder Skalenfelder ausgebildet sein können, eine Rückseite (4) und gegebenenfalls Verriegelungselemente (13) aufweist und mit einem Deckel (12) für das Rührgefäß (10), wobei darüber hinaus gegebenenfalls eine vorzugsweise zur automatischen Abarbeitung von Zubereitungsschritten ausgelegte Steuerung (21) vorgesehen ist. Zur vorteilhaften Weiterbildung auch hinsichtlich einer für den Benutzer ansprechenden und/oder in der Nutzung unterstützenden Ausbildung, wird vorgeschlagen, dass ein oder mehrere Gehäusebereiche (G) aus mittels in der Küchenmaschine (1) vorgesehenen Beleuchtungsmittel (16) insbesondere gleichmäßig beleuchtbaren Flächenteilen (15) besteht.

## Beschreibung

Die Erfindung betrifft eine elektromotorisch betriebene Küchenmaschine mit einem Rührgefäß und einem Rührwerk in dem Rührgefäß, wobei das Rührgefäß bevorzugt aufheizbar ist, und mit einem Gehäuse, wobei das Gehäuse verschiedene Gehäusebereiche, beispielsweise ein Bedienfeld auf dem Bedienungsmittel und/ oder Skalenfelder ausgebildet sein können, eine Rückseite und gegebenenfalls Verriegelungselemente aufweist und mit einem Deckel für das Rührgefäß, wobei darüber hinaus gegebenenfalls eine vorzugsweise zur automatischen Abarbeitung von Zubereitungsschritten ausgelegte Steuerung vorgesehen ist.

Küchenmaschinen der in Rede stehenden Art sind bekannt, so insbesondere zur Verwendung im Haushaltsbereich. Beispielsweise wird diesbezüglich auf die DE 102 10 442 A1 und auf die DE 10 2010 060 650 A1 verwiesen. Der Inhalt dieser Patentanmeldungen wird hiermit voll inhaltlich in die Offenbarung vorliegender Erfindung mit einbezogen, auch zu dem Zweck, Merkmale dieser Patentanmeldungen in Ansprüche vorliegender Erfindung mit einzubeziehen.

In dem Rührgefäß der Küchenmaschine sind insbesondere Lebensmittel unter Nutzung des Rührwerks verarbeitbar. So dient das Rührwerk beispielsweise zur Zerkleinerung von Lebensmitteln oder zum Verrühren im Zuge eines Garprozesses, wozu weiter bekannt ist, das Rührgefäß bzw. das Medium in dem Rührgefäß aufzuheizen. Die Küchenmaschine weist ein Gehäuse auf, in welchem das Rührgefäß aufgenommen ist. Das Gehäuse formt eine im Benutzungszustand im Wesentlichen dem Nutzer zugewandte Frontseite aus, welche weiter bevorzugt ein Bedienfeld mit Schaltern, Tastern, Reglern und/oder ein Display, beispielsweise in Form eines Touch-Displays aufweist. Der Frontseite gegenüberliegend ist eine Rückseite ausgebildet, gegebenenfalls einstückig übergehend in bevorzugt auch vorgesehene Seitenwandbereiche. Auch können Teile des Gehäuses Verriegelungselemente sein, welche bevorzugt elektromotorisch angetrieben sind. Diese Verriegelungselemente dienen insbesondere zur Festlegung des auf dem Rührgefäß aufliegenden Deckels im Betrieb der Küchenmaschine, weiter insbesondere im Betrieb des Rührwerks und/oder der Heizung.

Es sind in diesem Zusammenhang auch Küchenmaschinen bekannt mit einer Steuerung zur automatischen Abarbeitung von Zubereitungsschritten. Dies insbesondere im Zusammenhang mit einer Rezeptabarbeitung. In den einzelnen, bevorzugt nacheinander geschalteten Zubereitungsschritten werden in bevorzugter Ausgestaltung durch die Steuerung die Drehzahl des Rührwerks und/oder die Temperatur der Heizung eingestellt. Dies weiter bevorzugt über einen vorgegebenen Zeitraum.

Im Hinblick auf den bekannten Stand der Technik beschäftigt sich die Erfindung mit der Aufgabenstellung, eine Küchenmaschine mit einem Gehäuse, das einzelne Gehäusebereiche aufweisen kann, vorteilhafter, möglichst für einen Benutzer auch ansprechender und/oder in der Nutzung der Küchenmaschine unterstützend auszubilden.

Eine mögliche Lösung der Aufgabe ist nach einem ersten Erfindungsgedanken bei einer Küchenmaschine gegeben, bei welcher darauf abgestellt ist, dass ein oder mehrere Gehäusebereiche aus mittels in der Küchenmaschine vorgesehenen Beleuchtungsmittel insbesondere gleichmäßig beleuchtbaren Flächenteilen besteht. Zufolge dieser Ausgestaltung ist eine Küchenmaschine angegeben, bei welcher das Gehäuse, jedenfalls Bereiche des Gehäuses, optisch durch eine eigenständige, gegebenenfalls eingekoppelte Be- oder Ausleuchtung hervortreten können. Es handelt sich um Bereiche des Gehäuses die für sich außerhalb von ohnehin gegebenen Funktionsteilen, wie beispielsweise einem Display, Bedienknöpfen oder Skalenfeldern, die auch in bekannter Weise schon eine Beleuchtung aufweisen können, gegeben sind. Es handelt sich um Bereiche des Gehäuses, die ansonsten lediglich die Funktion haben, eine Abdeckung der darunter liegenden Aggregate zu ergeben oder der strukturellen Festigkeit dienen.

Die so geschaffene optische Wirkung, die auch als optische Anzeige bezeichnet sein kann, wirkt insbesondere in Form einer bevorzugt gleichmäßig ausgeleuchteten Fläche eines oder aller Gehäusebereiche in dem angegebenen Sinn. Bevorzugt handelt es sich um einen oder mehrere vereinzelte Bereiche, wie beispielsweise die Gehäuserückseite, ein das Bedienfeld umgebender bzw. Hintergrund-Gehäusebereich oder auch Verriegelungselemente einer solchen Küchenmaschine. Darüber hinaus alternativ oder ergänzend kann auch der Deckel des Rührgefäßes wie auch weitere Gehäusebereiche, beispielsweise ein Lüftungsgitter, einheitlich oder unterschiedlich farbig und/oder hinsichtlich ihrer Leuchtstärke unterschiedlich oder über den Zeitablauf unterschiedlich ausleuchtbar sein. Bestimmte beleuchtete Flächenteile, wie beispielsweise der Deckel oder eine Frontseite des Gehäuses sind hierbei in einer bevorzugten Ausgestaltung zur optischen Signalisierung beispielsweise eines Gerätezustandes farbig ausleuchtbar.

Auch kann ein beleuchtetes Flächenteil, alternativ mehrere beleuchtete Flächenteile, einen Stand-by-Modus der Küchenmaschine signalisieren, wobei sich die Ausleuchtung in diesem Modus unterscheiden kann zu der Ausleuchtung im üblichen Betriebsmodus.

In einer weiter bevorzugten Ausgestaltung ist ein Flächenteil durchgängig gleich stark mit nur einer Farbe ausgeleuchtet. Alternativ kann diesbezüglich auch ein Farbverlauf über die Fläche gegeben sein.

Auch ist zufolge der vorgeschlagenen Lösung ermöglicht, die Küchenmaschine, insbesondere Gehäusebereiche derselben an die farbliche Einrichtung beispielsweise einer Haushaltsküche anzupassen.

Zudem kann, insbesondere in Abhängigkeit von der Leuchtstärke, eine Ausleuchtung der Küchenmaschinen-Umgebung gegeben sein, so weiter insbesondere die das beleuchtete Flächenteil umgebende Umgebung.

Weiter ist bevorzugt, dass ein farbliches Erscheinungsbild und/oder eine Leuchtstärke eines Flächenteils zufolge einer Änderung des Beleuchtungsmittels, gegebenenfalls des eingekoppelten Lichts, einstellbar ist. Eine Änderung des eingekoppelten Lichts erfolgt bevorzugt über eine entsprechende Steuerung der Lichtquelle. Hier kommen bevorzugt mehrfarbige LEDs zum Einsatz, welche je nach Ansteuerung in einer der vorgegebenen Farben leuchten. Alternativ sind auch mehrere Lichtquellen je Flächenteil und/ oder je Einkopplungsbereich vorgesehen, welche mehreren Lichtquellen zur Erzeugung eines gewünschten Lichteffekts einzeln angesteuert werden.

Die Änderung des Beleuchtungsmittels, gegebenenfalls des eingekoppelten Lichts, erfolgt in bevorzugter Ausgestaltung in Abhängigkeit von einem durch die Steuerung der Küchenmaschine gegebenen Zustand der Küchenmaschine. So ist beispielsweise eine Änderung vorgesehen bei einer Erhöhung oder Absenkung der Rührwerk-Drehzahl und/oder der Temperatur der Heizung, weiter beispielsweise zum Schluss einer Zubereitungskette, zur Signalisierung eines Endes einer automatisierten Abarbeitung. Auch kann beispielsweise bei einer vorgegebenen Zugabe von Zutaten mit einem bestimmten Gewicht innerhalb einer Zubereitungskette das Erreichen des vorgegebenen Gewichts der Zutat durch das eingekoppelte Licht hinsichtlich der Farbe und/oder Leuchtstärke signalisiert werden. So ist weiter beispielsweise der Deckel des Rührgefäßes in einem Betriebszustand, in welchem in dem Rührgefäß eine Gartemperatur von 90 bis 100° C herrscht, warnend rot erleuchtet, um so dem Benutzer den zur Zeit vorherrschenden Garmodus auch visuell zu übermitteln. Mit einem Absenken der Temperatur beispielsweise nach Ausschalten der Heizung ändert sich in Folge einer Temperaturmessung der Farbzustand des Deckels von beispielsweise Rot in Richtung Blau.

Auch ist bevorzugt, dass durch einen Benutzer unabhängig von einem Betriebszustand der Küchenmaschine eine farbliche Einstellung und/ oder Leuchtintensität eines oder mehrerer Flächenteile vorgebbar ist. Hierdurch ist eine beispielsweise auf die Umgebung angepasste Beleuchtung der Flächenteile erreichbar. Der Benutzer ist entsprechend bevorzugt in der Lage, das gesamte Gehäuse oder Flächenbereiche des Gehäuses farblich und hinsichtlich der Lichtintensität nach seinem Geschmack zu gestalten. Auch ist bevorzugt die benutzerseitige Einstellung stimmungsvoller Lichtwechsel innerhalb aller oder innerhalb nur vereinzelter Flächenteile ermöglicht.

Die Einstellung der Farbe und/ oder der Leuchtintensität ist weiter bevorzugt über in bzw. an der Küchenmaschine vorgesehene Mittel vornehmbar, so beispielsweise über Schalter oder Taster. Bei Vorhandensein eines Touch-Displays ist die entsprechende Eingabe bzw. Steuerung auch hierüber möglich.

Bevorzugt ist weiter diese Einstellung mittels einer Fernbedienung vornehmbar. Eine solche Fernbedienung ist bevorzugt über Funk mit der Lichtsteuerung der Küchenmaschine verbunden. In üblicher Weise ist eine derartige Fernbedienung auf die Küchenmaschine abgestellt, weist entsprechend Tasten oder Sensorflächen zur Einstellung der Farbe und/ oder Leuchtintensität der einzelnen Flächenteile auf. Darüber hinaus ist im Sinne der Erfindung eine Fernbedienung auch beispielsweise ein Smartphone.

Ein Flächenteil besteht bevorzugt aus einem transparenten Kunststoff, welcher innenseitig mit einer reflektierenden Folie hinterlegt ist. Es liegen entsprechend der Gehäusekontur angepasst geformte Kunststoff-Flächenteile vor, insbesondere hergestellt aus Acryl. Im Bereich der Randkanten wird das Licht zur Ausleuchtung des Flächenteiles eingekoppelt. Der transparente Kunststoff wirkt als lichtauskoppelndes Material. Um die Lichtausbeute zu erhöhen wird die der Sichtseite abgewandte Unterseite mit einer reflektierenden Folie hinterlegt.

Durch die Ausgestaltung der Flächenteile aus einem transparenten Kunststoff mit randkantenseitig vorgesehenen Licht-Einkoppelbereichen wird eine gleichmäßig leuchtende Fläche erzeugt. Hierbei kommen insbesondere mehrfarbige LEDs zum Einsatz. Durch unterschiedliche Farben an den gegenüberliegenden Rändern der Flächenteile können Farbverläufe erzeugt werden. Nachstehend ist die Erfindung anhand der beigefügten Zeichnung erläutert, die aber lediglich ein Ausführungsbeispiel darstellt. Auf der Zeichnung zeigt:
- Fig. 1: eine Küchenmaschine der in Rede stehenden Art in perspektivischer Darstellung;

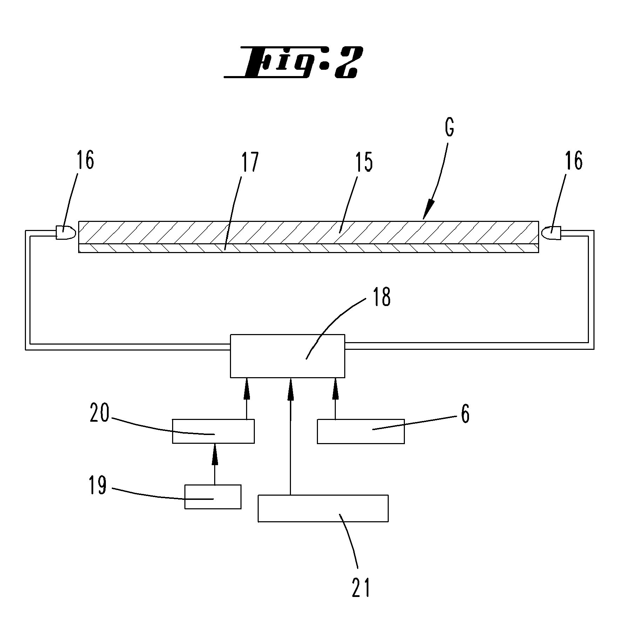

- Fig. 2: eine schematische Darstellung, eine Ansteuerung zur Lichteinkopplung in ein Flächenteil der Küchenmaschine betreffend.

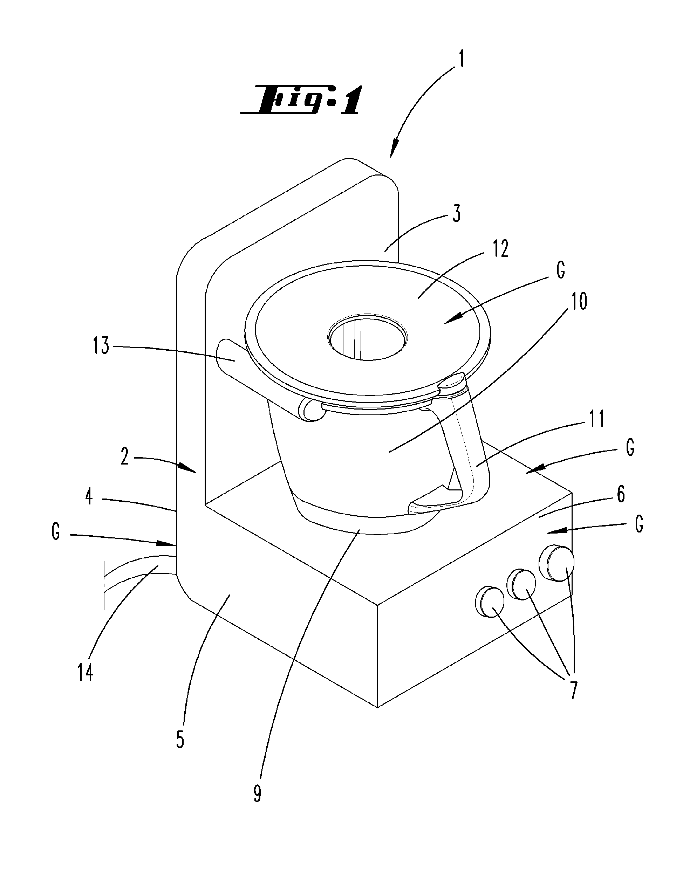

Dargestellt und beschrieben ist zunächst mit Bezug zu Figur 1 eine elektromotorisch angetriebene Küchenmaschine 1. Die Küchenmaschine 1 weist zunächst ein Gehäuse 2 auf mit einer Vorderseite 3 und einer Rückseite 4, welche Rückseite 4 in Seitenwände 5 übergeht.

Im Bereich der Vorderseite 3 ist ein Bedienfeld 6 ausgebildet. Dieses weist in der dargestellten Ausführungsform bevorzugt mehrere Bedienungsmittel 7 in Form von Schaltern oder Tastern auf.

Weiter weist das Gehäuse 2 eine, die Vorderseite 3 durchsetzende Gefäßaufnahme 9 auf. In dieser steht in Betriebsstellung der Küchenmaschine 1 ein Rührgefäß 10 mit einem Handgriff 11.

Das Rührgefäß 10 ist insbesondere im Betrieb der Küchenmaschine 1 von einem Deckel 12 überdeckt.

Der Deckel 12 ist weiter bevorzugt im Betriebszustand der Küchenmaschine 1 festgelegt, wozu an dem Gehäuse 2 Verriegelungselemente 13 vorgesehen sind.

Das bevorzugt aus einem Metall, insbesondere Edelstahl bestehende Rührgefäß 10 weist bodenseitig ein nicht dargestelltes Rührwerk auf. Dieses wird unter Zwischenschaltung einer Kupplung durch einen Elektromotor der Küchenmaschine 1 angetrieben. Der Elektromotor ist im Gehäuse 2 aufgenommen.

Die elektrische Versorgung der Küchenmaschine 1 erfolgt über ein Stromanschlusskabel 14.

Insbesondere die Vorderseite 3, die Rückseite 4 sowie die Seitenwände 5, darüber hinaus das Bedienfeld 6 und gegebenenfalls auch der Deckel 12 und die Verriegelungselemente 13 bilden Gehäusebereiche G aus, welche aus mittels eingekoppeltem Licht farbig einstellbaren bzw. beleuchtbaren Flächenteilen bestehen.

Diese Flächenteile der Gehäusebereiche G bestehen weiter bevorzugt aus einem transparenten Kunststoff.

Im Bereich der Randkanten der Flächenteile 15 sind bevorzugt eine oder mehrere Beleuchtungsmittel 16 als Lichtquellen vorgesehen, über welche in die Flächenteile 15 Licht, insbesondere farbiges Licht einkoppelbar ist. Bevorzugt kommen mehrfarbige LEDs zum Einsatz. Gegebenenfalls ist entlang einer Randkante eines Flächenteiles 15 auch nur ein solches Beleuchtungsmittel 16 vorgesehen.

Gegenüberliegend zu der nach außen gerichteten Sichtseite ist innenseitig das Flächenteil 15 mit einer reflektierenden Folie 17 hinterlegt, welche der Erhöhung der Lichtausbeute bei eingekoppeltem Licht dient. Die Folie 17 ist beispielsweise mit dem Flächenteil 15 verklebt.

Die Beleuchtungsmittel bzw. die bevorzugt mehrfarbigen LEDs (RGB-LEDs) werden über einen Controller 18 angesteuert. Über diesen wird die jeweilige Farbe und Leuchtintensität des Beleuchtungsmittels 16 gesteuert.

Die farbliche Einstellung und/oder Leuchtintensität einer oder mehrerer Beleuchtungsmittel 16 eines oder mehrerer Flächenteile 15 bzw. Gehäusebereiche G ist auf unterschiedliche Weise vorgebbar.

So zum einen durch den Benutzer unabhängig vom Betriebszustand der Küchenmaschine und zufolge entsprechender Eingabe über das Bedienfeld 6, insbesondere über die Bedienungsmittel 7.

Alternativ kann der Benutzer in einer weiter bevorzugten Ausgestaltung über eine Fernbedienung 19 die entsprechenden Befehle zur Farbwahl und/ oder Leuchtintensität an die Küchenmaschine 1 übermitteln, welche Küchenmaschine 1 in diesem Fall über einen entsprechenden Empfänger 20 verfügt. Über diesen werden die übertragenen Befehle wie auch bei unmittelbarer Eingabe über das Bedienfeld 6 an den Controller 18 übermittelt.

Weiter alternativ oder auch kombinativ zu einer Benutzereingabe erfolgt die Farbauswahl und/ oder die Leuchtintensität in Abhängigkeit von einer Steuerung 21 der Küchenmaschine 1. Diese Steuerung dient bevorzugt zur automatischen Abarbeitung von Zubereitungsschritten, beispielsweise im Rahmen eines Garprozesses zur Herstellung einer Speise, so dass eine Ausleuchtung eines oder mehrerer Gehäusebereiche G beispielsweise in Abhängigkeit von einem Zubereitungsschritt erfolgt.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Eine Küchenmaschine 1, die dadurch gekennzeichnet ist, dass ein oder mehrere Gehäusebereiche G aus mittels in der Küchenmaschine 1 vorgesehenen Beleuchtungsmittel 16 insbesondere gleichmäßig beleuchtbaren Flächenteilen 15 besteht.
Eine Küchenmaschine 1, die dadurch gekennzeichnet ist, dass ein farbliches Erscheinungsbild und/ oder eine Leuchtintensität eines Flächenteils 15 zufolge einer Änderung des Beleuchtungsmittels 16, gegebenenfalls des eingekoppelten Lichts, einstellbar ist.
Eine Küchenmaschine 1, die dadurch gekennzeichnet ist, dass die Änderung des Beleuchtungsmittels 16, gegebenenfalls des eingekoppelten Lichts, in Abhängigkeit von einem durch die Steuerung 21 der Küchenmaschine 1 gegebenen Zustand der Küchenmaschine 1 erfolgt.
Eine Küchenmaschine 1, die dadurch gekennzeichnet ist, dass durch einen Benutzer unabhängig von einem Betriebszustand der Küchenmaschine 1 eine farbliche Einstellung und/oder Leuchtintensität eines oder mehrerer Flächenteile 15 vorgebbar ist.
Eine Küchenmaschine 1, die dadurch gekennzeichnet ist, dass die Einstellung der Farbe und/ oder der Leuchtintensität mittels einer Fernbedienung 19 vornehmbar ist.
Eine Küchenmaschine 1, die dadurch gekennzeichnet ist, dass ein Flächenteil 15 aus einem transparenten Kunststoff besteht, der innenseitig mit einer reflektierenden Folie 17 hinterlegt ist.

### Bezugszeichenliste

- 1: Küchenmaschine
- 2: Gehäuse
- 3: Vorderseite
- 4: Rückseite
- 5: Seitenwand
- 6: Bedienfeld
- 7: Bedienungsmittel
- 8: ------------------
- 9: Gefäßaufnahme
- 10: Rührgefäß
- 11: Handgriff
- 12: Deckel
- 13: Verriegelungselement
- 14: Stromanschlusskabel
- 15: Flächenteil
- 16: Beleuchtungsmittel
- 17: Folie
- 18: Controler
- 19: Fernbedienung
- 20: Empfänger
- 21: Steuerung

- G: Gehäusebereich

## Patentansprüche

1. Elektromotorisch betriebene Küchenmaschine (1) mit einem Rührgefäß (10) und einem Rührwerk in dem Rührgefäß (10), wobei das Rührgefäß (10) bevorzugt aufheizbar ist, und mit einem Gehäuse (2), wobei das Gehäuse (2) verschiedene Gehäusebereiche (G), beispielsweise ein Bedienfeld (6), auf dem Bedienungsmittel (7) und/oder Skalenfelder ausgebildet sein können, eine Rückseite (4) und gegebenenfalls Verriegelungselemente (13) aufweist und mit einem Deckel (12) für das Rührgefäß (10), wobei darüber hinaus gegebenenfalls eine vorzugsweise zur automatischen Abarbeitung von Zubereitungsschritten ausgelegte Steuerung (21) vorgesehen ist, **dadurch gekennzeichnet, dass** ein oder mehrere Gehäusebereiche (G) aus mittels in der Küchenmaschine (1) vorgesehenen Beleuchtungsmittel (16) insbesondere gleichmäßig beleuchtbaren Flächenteilen (15) besteht.

2. Küchenmaschine nach Anspruch 1, **dadurch gekennzeichnet, dass** ein farbliches Erscheinungsbild und/oder eine Leuchtintensität eines Flächenteils (15) zufolge einer Änderung des Beleuchtungsmittels (16), gegebenenfalls des eingekoppelten Lichts, einstellbar ist.

3. Küchenmaschine nach einem der vorherigen Ansprüche, **dadurch gekennzeichnet, dass** die Änderung des Beleuchtungsmittels (16), gegebenenfalls des eingekoppelten Lichts, in Abhängigkeit von einem durch die Steuerung (21) der Küchenmaschine (1) gegebenen Zustand der Küchenmaschine (1) erfolgt.

4. Küchenmaschine nach einem der vorherigen Ansprüche, **dadurch gekennzeichnet, dass** durch einen Benutzer unabhängig von einem Betriebszustand der Küchenmaschine (1) eine farbliche Einstellung und/oder Leuchtintensität eines oder mehrerer Flächenteile (15) vorgebbar ist.

5. Küchenmaschine nach einem der vorherigen Ansprüche, **dadurch gekennzeichnet, dass** die Einstellung der Farbe und/oder der Leuchtintensität mittels einer Fernbedienung (19) vornehmbar ist.

6. Küchenmaschine nach einem der vorherigen Ansprüche, **dadurch gekennzeichnet, dass** ein Flächenteil (15) aus einem transparenten Kunststoff besteht, der innenseitig mit einer reflektierenden Folie (17) hinterlegt ist.

7. Küchenmaschine, **gekennzeichnet durch** eines oder mehrere der kennzeichnenden Merkmale eines der vorhergehenden Ansprüche.
